(19) Europäisches Patentamt / European Patent Office / Office européen des brevets

(11) **EP 1 625 352 B1**

(12) **EUROPÄISCHE PATENTSCHRIFT**

(45) Veröffentlichungstag und Bekanntmachung des Hinweises auf die Patenterteilung:
**10.10.2012 Patentblatt 2012/41**

(21) Anmeldenummer: **04722793.9**

(22) Anmeldetag: **24.03.2004**

(51) Int Cl.:
*G01C 19/5719* (2012.01)  *G01C 19/5726* (2012.01)

(86) Internationale Anmeldenummer:
**PCT/DE2004/000604**

(87) Internationale Veröffentlichungsnummer:
**WO 2004/102116 (25.11.2004 Gazette 2004/48)**

(54) **MIKROMECHANISCHER BEWEGUNGSSENSOR**

MICROMECHANICAL MOTION SENSOR

CAPTEUR DE DEPLACEMENT MICROMECANIQUE

(84) Benannte Vertragsstaaten:
**DE FR GB IT**

(30) Priorität: **08.05.2003 DE 10320725**

(43) Veröffentlichungstag der Anmeldung:
**15.02.2006 Patentblatt 2006/07**

(73) Patentinhaber: **ROBERT BOSCH GMBH**
**70442 Stuttgart (DE)**

(72) Erfinder:
- **KRIEG, Dietmar**
  **73230 Kirchheim/Teck (DE)**
- **GOMEZ, Udo-Martin**
  **71229 Leonberg (DE)**
- **NEUL, Reinhard**
  **70567 Stuttgart (DE)**

(56) Entgegenhaltungen:
**EP-A- 0 943 893    DE-A- 19 642 893**
**DE-A- 19 939 998**

**Beschreibung**

Stand der Technik

Die Erfindung betrifft einen mikromechanischen Bewegungssensor, der eine auf ein schwingungsfähig gelagertes und durch einen elektrostatischen mit einer periodischen Antriebsspannung beaufschlagten Schwingantrieb zu permanenter periodischer Schwingung angeregtes Balkenfederglied ausgeübte Auslenkung erfassen kann. Ein derartiger mikromechanischer Bewegungssensor, der unter anderem Balkenfedern und Kammantriebe verwendet, ist in dem US-Patent 5 025 346 und in dem US-patent 6 267 008 beschrieben.

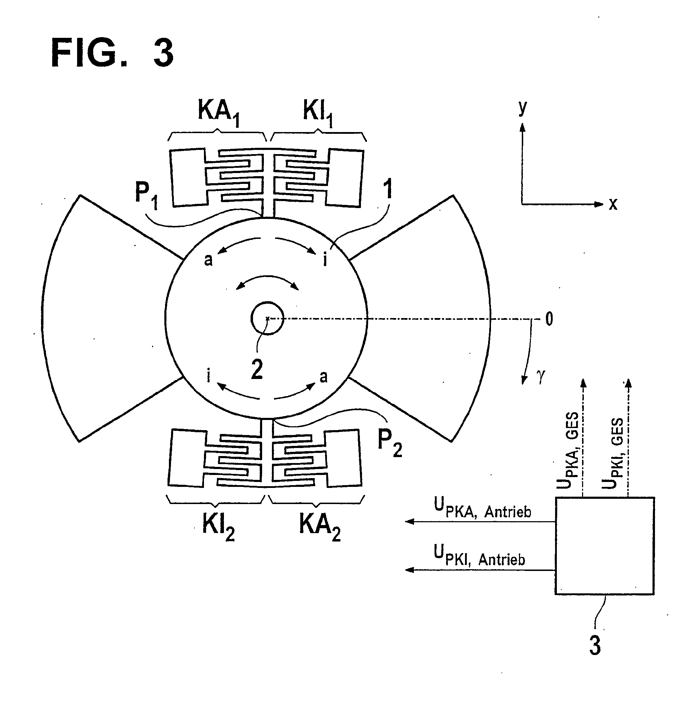

Balkenfedern zeigen bei größeren Auslenkungen nichtlineare Effekte. Bei einem bei der Anmelderin hergestellten mikromechanischen Drehratesensor (Robert Bosch GmbH Typenbezeichnung: MM2R) ist ein Rotor im Drehpunkt an einer X-Feder aufgehängt (siehe beiliegende Figur 3). Bereits bei Auslenkungen von $\pm 4°$ ist dieser nichtlineare Effekt deutlich spürbar. Er äußert sich durch eine Verschiebung der Resonanzfrequenz des Systems. Zusätzlich können infolge der Nichtlinearität Bereiche mit mehreren stabilen Betriebszuständen auftreten. Falls im realen Betrieb beispielsweise durch kleine Störungen ein sprunghafter Übergang zwischen den stabilen Zuständen erfolgt, wäre die Funktionsfähigkeit des Drehratesensors erheblich beeinträchtigt.

Bei dem in Figur 3 schematisch dargestellten bei der vorliegenden Anmelderin hergestellten Drehratesensor (Typ MM2R) weist das Balkenfederglied eine durch eine zentral angeordnete X-Feder 2 zentrisch gelagerte und zentralsymmetrische Schwungmasse 1 auf, die durch symmetrisch angreifende Kammantriebe zu einer periodischen Drehschwingung in einer lateralen Ebene x, y mit gleichgroßen positiven und negativen Auslenkungen i, a um eine Ruhelage O angeregt wird (der Winkel $\gamma$ bezeichnet den Auslenkungswinkel in positiver Richtung i). Ein erstes Kammantriebspaar weist zwei einander gegenüberliegende Kammantriebseinheiten KI1 und KA1 auf, die an einem an einem kreisbogenförmigen peripheren Abschnitt der

Schwungmasse 1 liegenden ersten Antriebspunkt P1 angreifen. Diese beiden ersten Kammantriebseinheiten KI1 und KA1, die jeweils für eine Auslenkung in positiver Richtung i und in negativer Richtung a vorgesehen sind, sind parallel zu einer das Zentrum der X-Feder 2 mit der Ruhelage der Schwungmasse 1 verbindenden gedachten Geraden angeordnet.

Zentralsymmetrisch zu dem ersten Paar der Kammantriebseinheiten KI1, KA2 greift ein zweites Paar Kammantriebseinheiten KI2, KA2 jeweils für positive Auslenkungen i und negative Auslenkungen a an einem dem ersten Angriffspunkt P1 diametral gegenüberliegenden zweiten Angriffspunkt P2 an der Schwungmasse 1 an. Auch die zuletzt erwähnten beiden Kammantriebseinheiten KI2 und KA2 sind parallel zu der das Zentrum der Schwungmasse 1 mit dem die Ruhelage kennzeichnenden Punkt O verbindenden gedachten Geraden angeordnet.

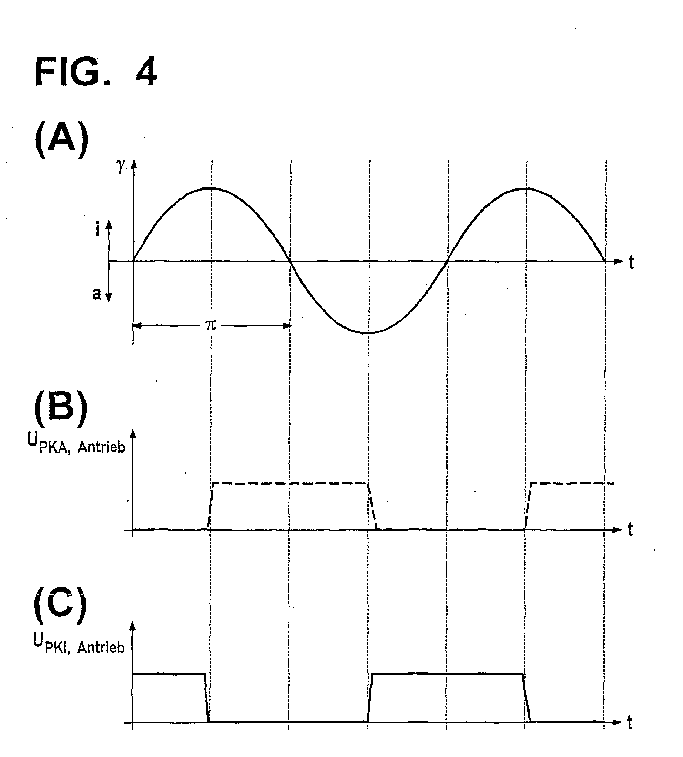

Eine Steuereinheit 3 erzeugt Antriebsspannungen $U_{PKI,Antrieb}$ und $U_{PKA,Antrieb}$ jeweils für die Kammantriebseinheiten KI1 und KI2 ( für die Anregung in positiver Auslenkungsrichtung i) sowie für die Kammantriebseinheiten KA1 und KA2 (für die Anregung in negativer Auslenkungsrichtung a) so, wie sie in der beiliegenden Figur 4 gezeigt ist. Diese zeigt in ihrem oberen Teil A die periodische und im idealen Fall harmonische Anregungsfunktion $\gamma(t)$ der Schwungmasse 1 in positiver Richtung i und negativer Richtung a , die die Periode $2\pi$ hat.

In dem mittleren Teil Fig. 4B ist gestrichelt die rechteckimpulsförmige Antriebsspannung $U_{PKA, Antrieb}$ für die Kammantriebseinheiten KA1 und KA2 für die Auslenkung in negativer Richtung a eingezeichnet, während der untere Teil Fig. 4C die gegenüber der Antriebsspannung $U_{PKA, Antrieb}$ gegenphasige Antriebsspannung $U_{PKI, Antrieb}$ für die Kammantriebseinheiten KI1, KI2 für positive Auslenkung zeigt, die ebenfalls Rechteckimpulse mit der Periodizität der in Figur 4A gezeigten periodischen Anregungsschwingung $\gamma(t)$ aufweist.

In Figur 4 ist außerdem ersichtlich, dass die Impulse der Antriebsspannung $U_{PKI, Antrieb}$ für positive Auslenkung i gemäß Figur 4C symmetrisch zu den positiven Nulldurchgängen der periodischen Schwingung $\gamma(t)$ der Schwungmasse 1 erzeugt werden, während die in Figur 4B erzeugten Impulse der Antriebsspannung $U_{PKA, Antrieb}$ für die negative Auslenkung symmetrisch zu den negativen Nulldurchgängen der periodischen Anregungsschwingung $\gamma(t)$ gemäß Figur 4A erzeugt werden. Da die in Figur 3 schematisch gezeigten Kammantriebe (KI und KA) jeweils nur in eine Richtung eine Kraft ausüben können, sind mehrere Kammantriebseinheiten notwendig, um den Rotor in oszillierende Bewegung versetzen zu können.

Für die von der Steuereinheit 3 angelegte Antriebsspannung wurde aus praktischen Gründen anstatt eines sinusförmigen Verlaufs jeweils eine Rechteckspannung erzeugt. Dies ist mit einer Steuerungslogik und einer Spannungspumpe in der Steuereinheit 3 realisierbar. Im Prinzip besteht eine Spannungspumpe aus einem Kondensator, der aufgeladen wird. Damit können kurzzeitig höhere Spannungen als die Betriebsspannung erzeugt werden. Bei Bedarf wird diese Spannung verwendet.

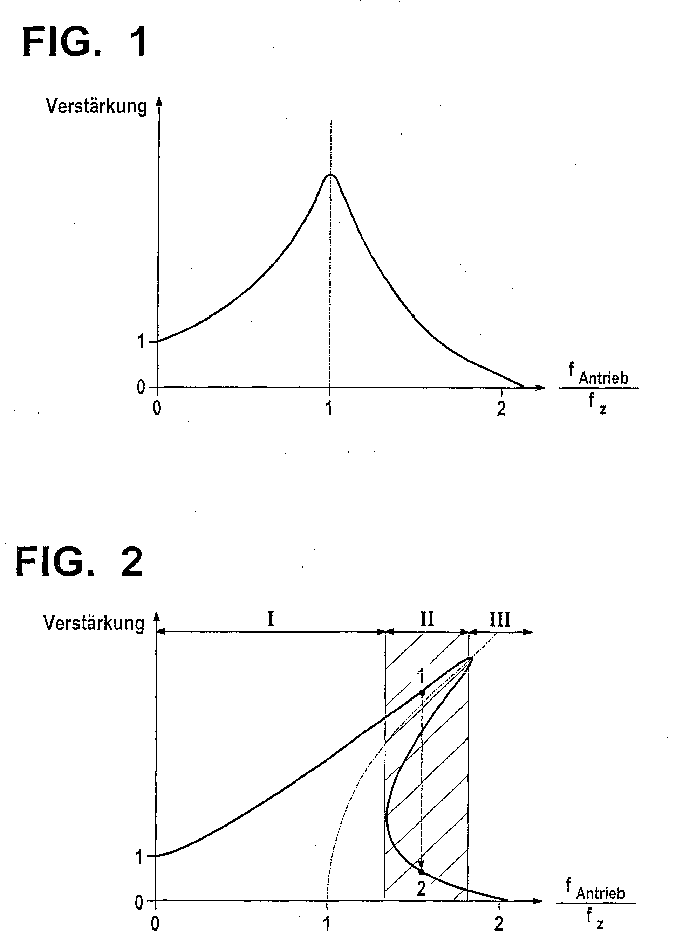

Die nichtlineare Balkenbiegung kann mittels der Duffing-Differenzialgleichung beschrieben werden. Da es sich um eine bekannte Differenzialgleichung handelt, kann auf eine eingehende Analyse der dynamischen Eigenschaften verzichtet werden. Statt dessen werden weiter unten anhand der beiliegenden Figuren 1 und 2 die beiden Haupteffekte (Frequenzverschiebung und Instabilität) kurz erläutert. Mit Hilfe der Duffing-Differenzialgleichung

$$M_{antrieb} = J_z \cdot \dot{\gamma} + b_{t,z} \cdot \dot{\gamma} + k_{tz,0} \cdot (1 + k_{tz,NL} \gamma^2) \gamma \qquad (1)$$

beziehungsweise

$$M_{antrieb} = J_z \cdot \ddot{\gamma} + b_{t,z} \cdot \dot{\gamma} + k_{tz,0} \cdot \gamma + k_{tz,0} \, k_{tz,NL} \, \gamma^3 \qquad (2)$$

lässt sich die mechanische Nichtlinearität der X-Feder beschreiben. Die Parametrierung erfolgt durch entsprechende Finite-Element-Rechnungen.

Wie aus Gleichung 2) ersichtlich ist, handelt es sich um eine Schwingungsdifferenzialgleichung zweiter Ordnung mit linearem Dämpfungsterm $b_{t,z}$ (Geschwindigkeitsproportionale Dämpfung). Mit $\gamma$ wird der die Auslenkung des Rotors beschreibende Winkel bezeichnet. Einziger Unterschied zur "Standard-Schwingungsdifferenzialgleichung" ist der nichtlineare Zusatzterm $k_{tz,0}k_{tz,NL}\gamma^3$. Der Term $k_{tz,0}$ ist die lineare Federkonstante (Torsion). Der Term $k_{tz,NL}$ beschreibt die Nichtlinearität. Das Trägheitsmoment des Rotors um die z-Achse wird mit $J_z$ bezeichnet. Die Anregung der Rotorschwingung erfolgt mittels des Antriebsmoments $M_{Antrieb}$.

Die beiliegende Figur 1 zeigt die Resonanzkurve der Verstärkung im linearen Fall mit Dämpfung. Der Verstärkungsfaktor wird genau dann maximal, wenn das System mit seiner Eigenfrequenz angeregt wird. Im nichtlinearen Fall verschiebt sich das Maximum der Resonanzkurve nach rechts. Wie aus beiliegender Figur 2 ersichtlich, neigt sich die Resonanzkurve zusätzlich nach rechts. Damit geht die eindeutige Zuordnung zwischen Verstärkung und Anregungsfrequenz verloren. Welche Verstärkung im Einzelfall vorliegt, hängt von der Vorgeschichte ab. Bei sanfter Steigerung der Anregungsfrequenz wandert man beispielsweise langsam von Bereich I nach Bereich II und gelangt somit zu Punkt 1 in

Figur 2. Im Falle überkritischer Anregung und langsamer Verringerung der Antriebsfrequenz wandert der Betriebszustand von Bereich III zu Punkt 2 in Bereich II. Damit sind zwei verschiedene Zustände bei ein und derselben Antriebsfrequenz möglich. Dies ist in der Regel ein unerwünschter Effekt, da beispielsweise durch Störimpulse ein sprunghafter Übergang von Punkt 1 nach 2 erfolgen kann. Die Gefahr des sprunghaften Wechsels besteht im gesamten Gebiet II (in Figur 2 schraffiert).

Zum Antriebsprinzip mittels Kammantrieben sei hier nur kurz der prinzipielle analytische Zusammenhang angegeben:

$$F_x \approx \varepsilon_0 \Delta U^2 \frac{h}{d_0} \qquad (3)$$

Aus Gleichung 3 sind folgende Zusammenhänge erkennbar:

- Je größer die Spannungsdifferenz ($\Delta U$) an den Kondensatorplatten des Kammantriebs, desto größer die Antriebskraft $F_X$

- Je größer die Höhe h der Kammantriebsstruktur, desto größer die Antriebskraft $F_X$

- Je kleiner der Abstand $d_0$ der Kondensatorplatten des Kammantriebs, desto größer die Antriebskraft $F_X$

Dies sind nur die grundlegenden Zusammenhänge. Bei detaillierter Betrachtung zeigt sich, dass die Ursache für die Kraft die Ausbildung von Streufeldern ist. Deshalb müssen bei genauer Betrachtung die Feldlinien zur Berechnung der Kraft herangezogen werden. Für kompliziertere Geometrien können die Zusammenhänge mittels Finite-Elemente-Berechnungen ermittelt werden.

Aufgabe und Vorteile der Erfindung

Nach dem oben gesagten, ist es Aufgabe der Erfindung, die oben beschriebenen, bei einem mikromechanischen Bewegungssensor, insbesondere einem mit Kammantriebseinheiten ausgestatteten Drehratesensor oder bei einem Linearschwinger durch mechanische Nichtlinearität auftretenden Probleme zu vermeiden und einen derartigen mikromechanischen Bewegungssensor anzugeben, bei dem die Nichtlinearitäten kompensiert sind.

Diese Aufgabe wird anspruchsgemäß gelöst.

Gemäß einem wesentlichen Aspekt ist ein diese Aufgabe lösender gattungsgemäßer mikromechanischer Bewegungssensor dadurch gekennzeichnet, dass am Balkenfederglied angreifende elektrostatische Kompensationsantriebsmittel vorgesehen sind, die mit einer zur Kompensation einer Nichtlinearität des Resonanzfrequenzgangs des Balkenfederglieds geeigneten periodischen Kompensationsspannung beaufschlagt werden.

Wenn ein derartiger mikromechanischer Bewegungssensor als Drehratesensor auf der Basis der bereits erwähnten grundsätzlichen Struktur des von der vorliegenden Anmelderin hergestellten Drehratesensors gestaltet ist, weist das Balkenfederglied eine durch eine zentral angeordnete X-Feder zentrisch gelagerte zentralsymmetrisch gestaltete Schwungmasse (Rotor) auf, die durch den Schwingantrieb zu einer Drehschwingung in einer lateralen X-Y-Ebene mit gleich großen positiven und negativen Auslenkungen um eine Ruhelage angeregt wird; der Schwingantrieb weist zur Anregung der Schwungmasse jeweils für die positive und negative Auslenkung jeweils wenigstens eine von einer Steuereinheit mit der periodischen Antriebsspannung angesteuerte Kammantriebseinheit zur Anregung der Schwungmasse jeweils für die positive und negative Auslenkung auf, deren Antriebskräfte an der Schwungmasse an wenigstens einem ersten in derselben X-Y-Ebene liegenden Angriffspunkt tangential so angreifen, dass sie die Schwungmasse symmetrisch um ihre Ruhelage anregen bzw. antreiben; und die Kompensationsantriebsmittel weisen zur Kompensation der Nichtlinearitäten jeweils in positiver und negativer Auslenkungsrichtung wenigstens eine Kammantriebseinheit auf, die am selben Angriffspunkt und/oder an einem diesem diametral im selben Abstand zum Zentrum der Schwungmasse gegenüberliegenden zweiten Angriffspunkt angreift.

Bei einer Ausführungsform können die Kompensations-Kammantriebseinheiten mit wenigstens einem der Paare der Kammantriebseinheiten identisch sein. Bei einer anderen Ausführungsform ist außer den zur normalen Anregung dienenden Kammantriebseinheiten zur Kompensation wenigstens ein zusätzliches Paar der Kompensations-Kammantriebseinheiten angeordnet.

Wenn ein derartiger mikromechanischer Bewegungssensor als Linearschwinger gestaltet ist, weist das Balkenfederglied ein durch eine zentral angeordnete Koppelfeder verbundenes und durch eine symmetrische Federaufhängung linear schwingungsfähig gelagertes System aus mehreren Schwungmassen auf, das durch den Schwingantrieb zu einer linearen Schwingung in einer lateralen Ebene mit gleich großen positiven und negativen Auslenkungen um eine Ruhelage angeregt wird; der Schwingantrieb weist zur Anregung des Schwungmassensystems jeweils für die positive und negative Auslenkung jeweils mindestens eine von einer Steuereinheit angesteuerte Kammantriebseinheit auf, deren Antriebskräfte am Schwungmassensystem an mehreren in derselben lateralen Ebene und einander jeweils an jeder Schwungmasse des Systems gegenüberliegenden Angriffspunkten so angreifen, dass sie die Schwungmassen des Systems um ihre jeweilige Ruhelage anregen; und die Kompensationsantriebsmittel haben für jede Schwungmasse des Systems wenigstens eine Kammantriebseinheit, die an wenigstens einem der Angriffspunkte jeder Schwungmasse angreifen.

Durch die erfindungsgemäß vorgeschlagene Verwendung von Kammantriebseinheiten zur Kompensation der Nichtlinearität verhält sich die Gesamtstruktur aus Balkenfederglied plus Kammantriebseinheiten linear. Damit entfallen die oben beschriebenen Probleme, die Nichtlinearitäten möglicherweise nach sich ziehen.

Die obigen und weitere vorteilhafte Merkmale eines erfindungsgemäßen mikromechanischen Bewegungssensor, insbesondere eines Drehratesensors und eines Linearschwingers, werden in der nachfolgenden Beschreibung bevorzugter Ausführungsbeispiele anhand der Zeichnung näher erläutert.

Zeichnung:

Figur 1 zeigt grafisch den bereits erläuterten Frequenzgang der Verstärkung (Resonanzkurve) im linearen Fall mit Dämpfung;

Figur 2 zeigt grafisch den im nichtlinearen Fall sich ergebenden Frequenzgang der Verstärkung, bei dem, wie schon erläutert, das Maximum der Resonanzkurve nach rechts geneigt ist;

Figur 3 zeigt eine schematische Aufsicht auf den bereits eingangs besprochenen als mikromechanischer Bewegungssensor gestalteten Drehratesensor und deutet gleichzeitig ein erstes Ausführungsbeispiel des erfindungsgemäßen (kompensierten) Drehratesensors an;

Die Figuren 4A, B und C zeigen grafisch jeweils die idealisierte Schwingungsform der zentrisch gelagerten Schwungmasse gemäß Figur 3, die Antriebsspannung für die Kammantriebseinheit für negative Auslenkungsrichtung sowie die Antriebsspannung für die Kammantriebseinheiten für positive Auslenkungsrichtung, wie sie von der Steuereinheit gemäß Figur 3 erzeugt werden;

Figur 5 zeigt eine schematische Aufsicht auf ein zweites erfindungsgemäßes Ausführungsbeispiel, bei dem zur Kompensation der Nichtlinearität zusätzliche Kompensations-Kammantriebseinheiten vorgesehen sind;

Die Figuren 6A-F zeigen grafisch zusätzlich zu den in Figur 4A-4C bereits gezeigten Zeitdiagrammen gemäß Fig. 6A, 6B und 6C eine Schwingungsform eines Kompensationsspannungssignals für negative Auslenkung (Figur 6D), eine Schwingungsform eines Kompensationsspannungssignals für positive Auslenkung (Figur 6E) und in Fig.6F jeweils eine Summe der jeweiligen Antriebsspannungssignale mit dem entsprechenden Kompensationsspannungssignal, und

Figur 7 zeigt in schematischer Aufsicht ein drittes Ausführungsbeispiel eines erfindungsgemäßen mikromechanischen Bewegungssensors in Form eines Linearschwingers, bei dem zur Kompensation der Nichtlinearität zusätzliche Kompensations-Kammantriebseinheiten vorgesehen sind.

Ausführungsbeispiele

Zur Kompensation der mechanischen Nichtlinearität des Biegebalkens wird zusätzlich zum bisherigen Antriebssignal (siehe Figur 4) eine Kompensationsspannung an die Kammantriebe angelegt, die exakt den nichtlinearen Term in der Differenzialgleichung 2 kompensiert. Es ist zu beachten, dass Kammantriebe aufgrund ihres Wirkprinzips nur in einer Richtung Kräfte aufbringen können. Somit übernimmt die Kompensation im Fall positiver Auslenkung i der Kammantrieb KA und im anderen Fall der negativen Auslenkung a der Kammantrieb KI.

Die Form der Kompensationsspannung ergibt sich aus den analytischen Zusammenhängen beim Drehratesensor. Aus Gleichung 2 ergibt sich das zu kompensierende Moment:

$$M_{Komp} = k_{tz,0} k_{tz,NL} \cdot \gamma^3 \qquad (4)$$

Soll dieses Moment über die vorhandenen Kammantriebe (KI1, KI2 und KA1 und KA2) aufgebracht werden, so ergibt sich folgende Gleichung:

$$M_{Komp} = 2 \frac{\left(U_{PKI,PKA} - U_{PCM}\right)^2 \varepsilon_0 h}{d_0} k_{Streu} n_{Comb} r_{eff} = k_{tz,0} k_{tz,NL} \cdot |\gamma|^3 \qquad (5)$$

worin $k_{Streu}$ ein Korrekturfaktor zur Berücksichtigung von Steufeldeffekten ist, $n_{Comb}$ die Anzahl der Kämme und $r_{eff}$ der resultierende Wirkradius zur Berechnung des Antriebsmoments ist. Mit $U_{PCM}$ wird das gemeinsame Bezugspotenzial aller Kammantriebe bezeichnet.

Gleichung 5 kann nach der Spannung $U_{PKI}$ (An den Kammantriebseinheiten KI1, KI2 anliegende Spannung) beziehungsweise $U_{PKA}$ (An den Kammantriebseinheiten KA1, KA2 anliegende Spannung) aufgelöst werden und man erhält damit die Kompensationsspannung

$$U_{PKI, PKA, Komp} = \sqrt{\frac{k_{tz,0} k_{tz,NL} d_0}{2h \varepsilon_0 k_{Streu} n_{Comb} r_{eff}} \cdot |\gamma|^3} + U_{PCM} \qquad (6)$$

Aus der Addition der Antriebsspannung $U_{PKI, PKA, Antrieb}$ (siehe Figur 4) und der in Gleichung 6 berechneten Kompensationsspannung $U_{PKI, PKA, Komp}$ ergibt sich der ideale Spannungsverlauf an den Kammantrieben $U_{PKI, PKA, Ges}$. In praktischen Anwendungen müsste diese Kurve durch einen stufenförmigen Verlauf angenähert werden.

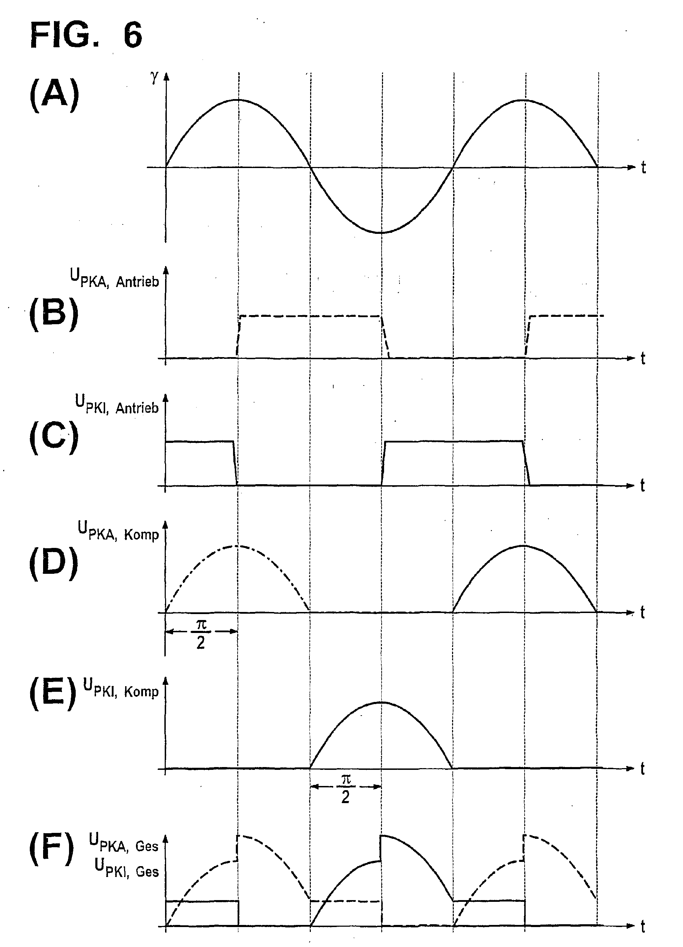

Somit wird bei einem ersten Ausführungsbeispiel die aus der Summe der jeweiligen Antriebsspannungen $U_{PKA, Antrieb}$ und $U_{PKI, Antrieb}$ (Figur 6B und C) mit den entsprechenden Kompensationsspannungen $U_{PKA, Komp}$ und $U_{PKI, Komp}$ gemäß Figur 6D und E gebildete Gesamtspannung $U_{PKA, Ges}$ und $U_{PKI, Ges}$ gemäß Figur 6F zur Kompensation der Nichtlinearität den jeweiligen Kammantriebseinheiten KA1, KA2 und KI1, KI2 gemäß Figur 3 zugeführt. Dazu erzeugt die Steuereinheit 3 die in Figur 6F jeweils in gestrichelten und ausgezogenen Linien dargestellten Gesamtspannungen $U_{PKA, Ges}$ und $U_{PKI, Ges}$ (In Fig.3 gestrichelt angedeutet) und legt sie an die entsprechenden Kammantriebseinheiten KA1, KA2 und KI1, KI2 an.

Bei dem in Figur 3 gezeigten Ausführungsbeispiel eines erfindungsgemäßen Drehratesensors weist der Schwingantrieb vier Kammantriebseinheiten KA1, KA2 und KI1, KI2 auf, von denen eine erste und zweite Kammantriebseinheit für positive i und negative Auslenkung a ein erstes Paar (KI1, KA1) bilden, das einen ersten gemeinsamen Angriffspunkt P1 an der Schwungmasse 1 hat. Eine dritte und vierte Kammantriebseinheit KI1 und KA2 bilden ein zweites Paar, das am gegenüberliegenden gemeinsamen Angriffspunkt an der Schwungmasse angreift. Die beiden Kammantriebseinheiten KI1 und KA1 bzw. KI2 und KA2 liegen einander gegenüber, und zwar parallel zu einer die Ruhelage O der Schwungmasse 1 definierenden und durch das Zentrum derselben gehenden gedachten Linie. Auf diese Weise addieren sich jeweils die Antriebskräfte der Kammantriebseinheiten für positive Auslenkung i und die Antriebskräfte der Kammantriebseinheiten für negative Auslenkung a.

Gemäß den Teilen B und C der Figuren 4 und 6 sind die von der Steuereinheit 3 erzeugten Antriebsspannungssignale $U_{PKA, Antrieb}$ und $U_{PKI, Antrieb}$ gegenphasige Rechteckspannungsimpulse, und zwar erzeugt die Steuereinheit 3 die Rechteckspannungsimpulse $U_{PKI, Antrieb}$ für positive Auslenkung i jeweils symmetrisch zu den positiven Nulldurchgängen der in Figur 4A gezeigten Schwingungsform $\gamma(t)$ und die Rechteckspannungsimpulse $U_{PKA, Antrieb}$ für die Kammantriebseinheiten KA1 und KA2 für negative Auslenkung jeweils symmetrisch zu den negativen Nulldurchgängen der Schwingungsform $\gamma(t)$.

Die von der Steuereinheit 3 erzeugten Kompensationsspannungssignale $U_{PKA, Komp}$ und $U_{PKI, Komp}$ gemäß Figur 6D und 6E sind ebenfalls gegenphasig zueinander, sind jedoch jeweils symmetrisch zu den Auslenkungsmaxima jeweils in positiver und negativer Auslenkungsrichtung der Schwingungsform $\gamma(t)$. Damit ist das Kompensationsspannungssignal $U_{PKA, Komp}$ für negative Auslenkung um 90° ($\pi/2$) gegenüber dem Antriebsspannungssignal $U_{PKI, Antrieb}$ für positive Auslenkung verzögert, und das Kompensationsspannungssignal $U_{PKI, Komp}$ gemäß Figur 6E ist gegenüber dem Antriebsspannungssignal $U_{PKA, Antrieb}$ ebenfalls um 90° ($\pi/2$) verzögert.

Um die Praxistauglichkeit eines in der oben beschriebenen Weise kompensierten Drehratesensors zu prüfen, kann die obige Gleichung 6 mittels Simulink-Standardblöcken in ein Simulationsmodell umgesetzt werden. Dieses Simulationsmodell errechnet aus den Eingangssignalen:

- Auslenkungswinkel $\gamma$ der Schwungmasse 1,
- Referenzpotenzial $U_{PCM}$ und
- Antriebsspannung $U_{PKI, Antrieb}$' $U_{PKA, Antrieb}$ die resultierende Gesamtspannung.

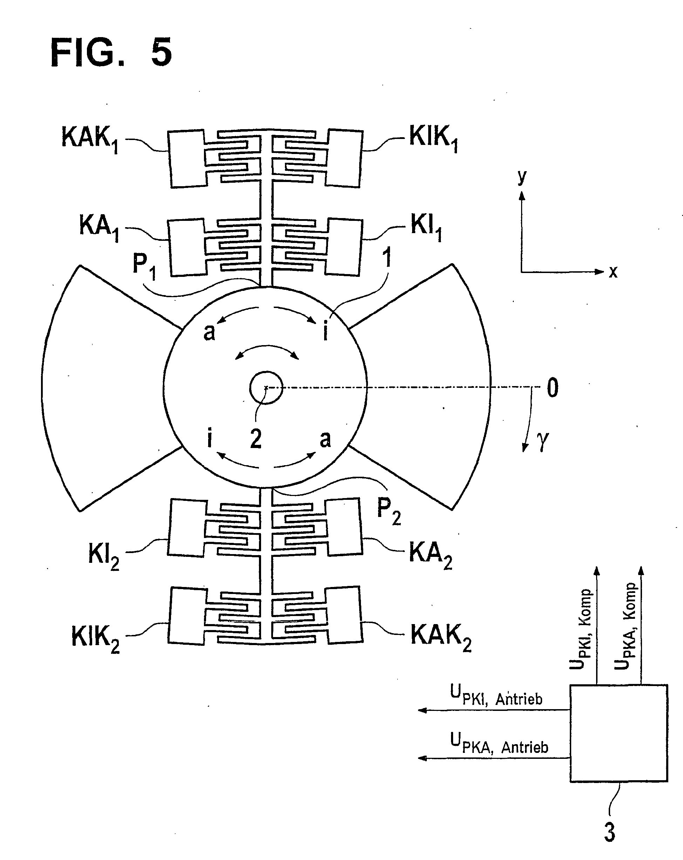

Die Simulationsergebnisse haben gezeigt, dass, um eine ausreichende Kompensation der Nichtlinearität zu erreichen die in Figur 6F gezeigten und in Fig.3 gestrichelt angedeuteten Gesamtspannungen an den Kammantriebseinheiten sehr hohe Spannungspegel annehmen müssen, bei denen herkömmliche Kammantriebseinheiten nicht mehr funktionieren. Diese Erkenntnis hat zu einem in Figur 5 gezeigten zweiten Ausführungsbeispiel geführt, das zusätzlich zu den in Figur 3 gezeigten vier Kammantriebseinheiten KI1, KI2 und KA1, KA2 vier Kompensations-kammantriebseinheiten KIK1, KIK2 und KAK1 und KAK2 aufweist, die von der Steuereinheit 3 ausschließlich mit einem jeweiligen Kompensationsspannungssignal $U_{PKI, Komp}$ und $U_{PKA, Komp}$ gemäß Figur 6E und D angesteuert werden. Die Kammantriebseinheiten KI1, KI2 und KA1, KA2 der Antriebsmittel erhalten von der Steuereinheit 3 dagegen lediglich die in Figur 6B und 6C gezeigten Antriebsspannungssignale $U_{PKI, Antrieb}$ und $U_{PKA, Antrieb}$, so dass das Problem, dass eine Kammantriebseinheit mit einer zu hohen Spannung belastet wird, vermieden ist.

Man erkennt bei dem in Figur 5 gezeigten Ausführungsbeispiel, dass die zusätzlichen Kompensations-Kammantriebseinheiten KIK1, KIK2, KAK1 und KAK2 ebenfalls paarweise angeordnet und an denselben beiden diametral entgegengesetzten Angriffspunkten P1 und P2 der Schwungmasse angreifen. Die bei diesem Ausführungsbeispiel verwendete paarweise Anordnung von vier zusätzlichen Kompensations-Kammantriebseinheiten KIK1, KAK1 und KIK2, KAK2 gestaltet den Aufbau dieses Drehratesensors vollkommen symmetrisch. Selbstverständlich könnte eine Kompensation der Nichtlinearität auch mit nur zwei zusätzlichen Kompensations-Kammantriebseinheiten, z.B. mit den Kompensations-Kammantriebseinheiten KAK1 und KIK1 oder andererseits mit den Kompensations-Kammantriebseinheiten KIK2 und KAK2 ausgeführt werden. Ebenfalls ist eine Anordnung mit nur zwei Kompensations-Kammantriebseinheiten KIK1 und KAK2 oder KAK1 und KIK2 möglich.

Da die oben erwähnte Simulation ebenfalls aufgezeigt hat, dass die Amplitude des Kompensationsspannungssignals etwa linear mit dem Auslenkungswinkel $\gamma$ anwächst, sollte bei der Auslegung des Antriebs des Drehratesensors darauf geachtet werden, dass möglichst geringe Auslenkungsamplituden notwendig sind. Bei der Konstruktion der Federgeometrie sollte auf möglichst geringe Nichtlinearität geachtet werden. Die im zweiten Ausführungsbeispiel beschriebenen zusätzlichen Kompensations-Kammantriebseinheiten bringen bei der derzeit verwendeten Technologie der Drehratesensoren gegenüber dem ersten Ausführungsbeispiel den Vorteil, dass die für die Antriebsmittel vorgesehenen Kammantriebseinheiten für niedrigere Spannungsamplituden auslegt sein können.

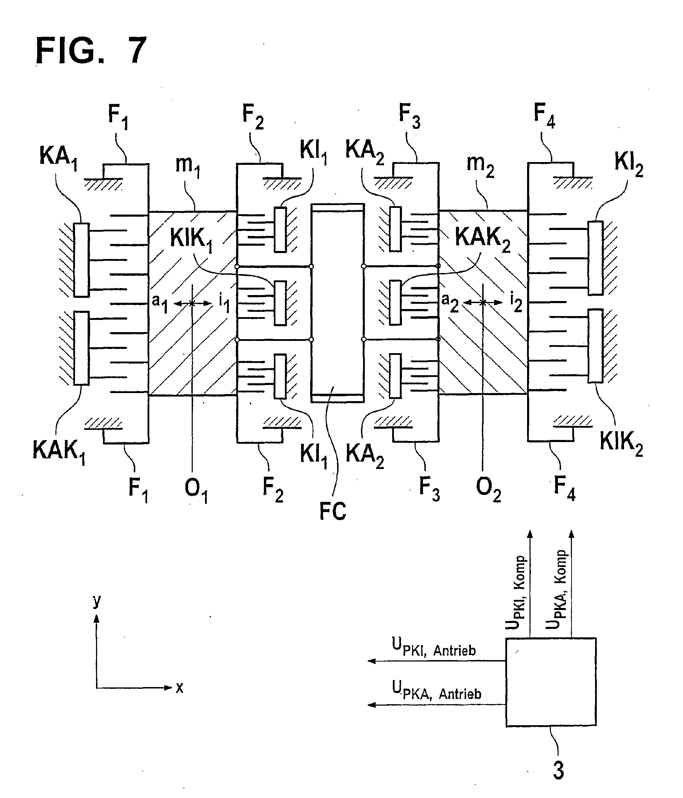

Figur 7 zeigt in schematischer Aufsicht ein drittes Ausführungsbeispiel eines erfindungsgemäßen mikromechanischen Bewegungssensors in Form eines Linearschwingers, bei dem zur Kompensation der Nichtlinearität zusätzliche Kompensations-Kammantriebseinheiten vorgesehen sind.

Gemäß Figur 7 weist das Balkenfederglied ein durch eine zentral angeordnete Koppelfeder FC verbundenes und durch eine symmetrische Federaufhängung F1-F4 linear schwingungsfähig gelagertes System aus in diesem Fall zwei Schwungmassen m1, m2 auf, die jeweils durch Kammantriebeinheiten KI1, KA1, KI2, KA2 zu einer linearen Schwingung in einer lateralen x-y-Ebene mit gleich großen positiven und negativen Auslenkungen i1, i2 und a1, a2 um ihre jeweilige Ruhelage O1, 02 angeregt werden.

Der Schwingantrieb weist somit zur Anregung der beiden Schwungmassen m1, m2 des Schwungmassensystems vier von einer Steuereinheit 3 angesteuerte Kammantriebeinheiten auf, deren Antriebskräfte an den beiden Schwungmassen an jeweils gegenüberliegenden Angriffspunkten in derselben lateralen x-y-Ebene so angreifen, dass sie die Schwungmassen m1, m2 des Systems um ihre jeweilige Ruhelage 01,02 anregen. Sowohl die Koppelfeder FC als auch die Federaufhängung F1-F4 verursachen Nichtlinearitäten der Schwingung, die erfindungsgemäß kompensiert werden. Zur Kompensation der Nichtlinearität weisen die Kompensationsantriebsmittel für jede Schwungmasse m1, m2 des Systems ebenfalls zwei Kompensations-Kammantriebeinheiten KIK1, KAK1 und KIK2, KAK2 auf, die an denselben Angriffspunkten jeder Schwungmasse m1 und m2 angreifen wie die Kammantriebeinheiten des Schwingantriebs. Für die den letzteren, und den Kompensations-Kammantriebeinheiten von der Steuereinheit 3 zugeführten Antriebs- und Kompensationsspannungssignale gilt sinngemäß dasselbe, wie es oben zu dem in Figur 5 gezeigten zweiten Ausführungsbeispiel ausgeführt wurde.

Die Steuereinheit kann zweckmäßigerweise die Schwingungsform der Kompensationsspannungssignale durch Treppensignale mit feinen Stufen annähern.

Damit größere Kompensationsmomente bei gleicher Spannung erzielt werden, ist es von Vorteil bei den Ausführungsbeispielen mit den separaten Kompensations-Kammantriebeinheiten deren effektiven Wirkradius bzw. deren effektive Wirkdistanz größer zu machen als den effektiven Wirkradius bzw., die effektive Wirkdistanz der Kammantriebeinheiten des Schwingantriebs.

## Patentansprüche

1. Mikromechanischer Bewegungssensor, der eine auf ein schwingungsfähig gelagertes und durch einen elektrostatischen mit einer periodischen Antriebsspannung beaufschlagten Schwingantrieb zu permanenter periodischer Schwingung ($\gamma$(t)) angeregtes Balkenfederglied (1, 2) ausgeübte Auslenkung erfassen kann, **dadurch gekennzeichnet, dass** am Balkenfederglied (1, 2, m1, m2, F1-F4, FC)) angreifende elektrostatische Kompensationsantriebsmittel vorgesehen sind, die mit einer zur Kompensation einer Nichtlinearität des Resonanzfrequenzgangs des Balkenfederglieds (1,2, m1, m2, F1-F4, FC) geeigneten periodischen Kompensationsspannung beaufschlagt werden.

2. Mikromechanischer Bewegungssensor nach Anspruch 1, **dadurch gekennzeichnet, dass** er als Linearschwinger gestaltet ist, bei dem das Balkenfederglied ein durch eine zentral angeordnete Koppelfeder (FC) verbundenes und durch eine symmetrische Federaufhängung (F1-F4) linear schwingungsfähig gelagertes System aus mehreren Schwungmassen (m1, m2) aufweist, das durch den Schwingantrieb (KI, KA) zu einer linearen Schwingung in einer lateralen Ebene (x, y) mit gleich großen positiven (i1, i2) und negativen Auslenkungen (a1, a2) um eine Ruhelage (O1, 02) angeregt wird,
dass der Schwingantrieb zur Anregung des Schwungmassensystems (m1, m2) jeweils für die positive (i1, i2) und negative Auslenkung (a1, a2) jeweils mindestens eine von einer Steuereinheit (3) angesteuerte Kammantriebeinheit (KI1, KI2, KA1, KA2) aufweist, deren Antriebskräfte am Schwungmassensystem an mehreren in derselben lateralen Ebene (x, y) und einander jeweils an jeder Schwungmasse (m1, m2) des Systems gegenüberliegenden Angriffspunkten so angreifen, dass sie die Schwungmassen (m1, m2) des Systems um ihre jeweilige Ruhelage (O1, 02) anregen, und
dass die Kompensationsantriebsmittel für jede Schwungmasse (m1, m2) des Systems wenigstens eine Kammantriebseinheit (KIK1, KIK2, KAK1, KAK2) aufweisen, die an wenigstens einem der Angriffspunkte jeder Schwungmasse (m1, m2) des Systems angreifen.

3. Mikromechanischer Bewegungssensor nach Anspruch 1, **dadurch gekennzeichnet, dass** er als Drehratesensor gestaltet ist, bei dem das Balkenfederglied (1, 2) eine durch eine zentral angeordnete X-Feder (2) zentrisch gelagerte zentralsymmetrisch gestaltete Schwungmasse (1) aufweist, die durch den Schwingantrieb (KI, KA) zu einer Drehschwingung in einer lateralen Ebene (x, y) mit gleich großen positiven und negativen Auslenkungen (i, a) um eine Ruhelage (O) angeregt wird,
dass der Schwingantrieb zur Anregung der Schwungmasse (1) jeweils für die positive und negative Auslenkung (i, a) jeweils wenigstens eine von einer Steuereinheit (3) mit der periodischen Antriebsspannung angesteuerte Kammantriebeinheit (KI1, KI2, KA1, KA2) zur Anregung der Schwungmasse (1) aufweist, deren Antriebskräfte an der Schwungmasse (1) an wenigstens einem ersten in derselben lateralen Ebene (x, y) liegenden Angriffspunkt (P1, P2) tangential so angreifen, dass sie die Schwungmassen (1) symmetrisch um ihre Ruhelage (O)anregen und

dass die Kompensationsantriebsmittel wenigstens eine Kammantriebseinheit aufweisen, die am selben Angriffspunkt (P1, P2) und/oder an einem diesem diametral im selben Abstand zum Zentrum (Z) der Schwungmasse (1) gegenüberliegenden zweiten Angriffspunkt (P2, P1) angreift.

4. Mikromechanischer Bewegungssensor nach einem der Ansprüche 2 oder 3, **dadurch gekennzeichnet, dass** die wenigstens eine Kammantriebseinheit der Kompensationsantriebsmittel wenigstens eine der Kammantriebseinheiten (KI1, KI2, KA1, KA2) des Schwingantriebs ist, und
die Steuereinheit (3), deren Antriebsspannung ($U_{PKI, Antrieb}$, $U_{PKA, Antrieb}$) mit der Kompensationsspannung ($U_{PKI, Komp}$, $U_{PKA, Komp}$) zu einer Gesamtanregungsspannung ($U_{PKI,Ges}$, $U_{PKA,Ges}$) überlagert.

5. Mikromechanischer Bewegungssensor nach einem der Ansprüche 2 oder 3, **dadurch gekennzeichnet, dass** die wenigstens eine Kammantriebseinheit der Kompensationsantriebsmittel eine zusätzliche Kompensations-Kammantriebseinheit (KIK1, KIK2, KAK2, KAK2) ist, der die Steuereinheit (3) nur die Kompensationsspannung ($U_{PKI, Komp}$, $U_{PKA, Komp}$) separat zuführt.

6. Mikromechanischer Bewegungssensor nach einem der Ansprüche 3 bis 5, **dadurch gekennzeichnet, dass** der Schwingantrieb vier symmetrische Kammantriebseinheiten (KA1, KA2, KI1, KI2) aufweist, von denen eine erste und zweite Kammantriebseinheit (KI1, KA1) jeweils für positive und negative Auslenkung (i, a) ein erstes Paar bilden, das einen ersten gemeinsamen Angriffspunkt (P1) an der Schwungmasse (1) hat und eine dritte und vierte Kammantriebseinheit (KI2, KA2) ein zweites Paar jeweils für positive und negative Auslenkung (i, a) bilden, das am zweiten gemeinsamen Angriffspunkt (P2) an der Schwungmasse (1) angreift, die beiden Kammantriebseinheiten (KI1, KA1 und KI2, KA2) jedes Paars einander gegenüber und parallel zu einer die Ruhelage (O) der Schwungmasse definierenden und durch das Zentrum gehenden gedachten Linie so angeordnet sind, dass sich jeweils die Antriebskräfte der Kammantriebseinheiten für positive Auslenkung (i) und die Antriebskräfte der Kammantriebseinheiten für negative Auslenkung (a) addieren, und die Steuereinheit (3) die Antriebsspannung ($U_{PKI, Antrieb}$) den Kammantriebseinheiten (KI1, KI2) für positive Auslenkung (i) gegenphasig zur Antriebsspannung ($U_{PKA, Antrieb}$) für die Kammantriebseinheiten (KA1, KA2) für negative Auslenkung (a) zuführt.

7. Mikromechanischer Bewegungssensor nach Anspruch 5 oder 6, **dadurch gekennzeichnet, dass** die Kompensationsantriebsmittel zwei zusätzliche Kompensations-Kammantriebseinheiten (KIK1, KAK2) jeweils für positive (i) und negative Auslenkung (a) aufweisen, die jeweils am ersten und zweiten gemeinsamen Angriffspunkt (P1, P2) an der Schwungmasse (1) angreifen und so angeordnet sind, dass sich deren Angriffskräfte für positive (i) und negative Auslenkung (a) jeweils addieren und
die Steuereinheit (3) die Kompensationsspannung ($U_{PKI,KOMP}$) der Kompensations-Kammantriebseinheit (KIK1) für positive Auslenkung (i) gegenphasig zur Kompensationsspannung ($U_{PKA,KOMP}$) zuführt, die sie der Kompensations-Kammantriebseinheit (KAK2) für negative Auslenkung (a) einspeist.

8. Mikromechanischer Bewegungssensor nach Anspruch 5 oder 6, **dadurch gekennzeichnet, dass** die Kompensationsantriebsmittel vier zusätzliche Kompensations-Kammantriebseinheiten (KIK1, KAK2, KIK2, KAK2) aufweisen, von denen eine erste und zweite Kammantriebseinheit (KIK1, KAKI) jeweils für positive (i) und negative Auslenkung (a) ein erstes Paar bilden, das am ersten gemeinsamen Angriffspunkt (P1) an der Schwungmasse (1) angreift, und eine dritte und vierte Kammantriebseinheit (KIK2, KAK2) jeweils für positive (i) und negative Auslenkung (a) ein zweites Paar bilden, das am zweiten gemeinsamen Angriffspunkt (P2) an der Schwungmasse (1) angreift, die beiden Kompensations-Kammantriebseinheiten (KIK1, KAK1 und KIK2, KAK2) jedes Paars einander gegenüber und parallel zu einer die Ruhelage (O) der Schwungmasse (1) definierenden und durch deren Zentrum gehenden gedachten Linie so angeordnet sind, dass sich deren Antriebskräfte für positive (i) und negative Auslenkung (a) jeweils addieren und
die Steuereinheit (3) die Kompensationsspannung den Kompensations-Kammantriebseinheiten (KIK1, KIK2) für positive Auslenkung (i) gegenphasig zur Kompensationsspannung für die Kompensations-Kammantriebseinheiten (KAK1, KAK2) für negative Auslenkung (a) zuführt.

9. Mikromechanischer Bewegungssensor nach einem der Ansprüche 2, 4 oder 5, **dadurch gekennzeichnet, dass** das Schwungmassensystem eine erste (m1) und zweite Schwungmasse (m2) aufweist, die durch die zentrale Koppelfeder (FC) federelastisch verbunden sind, dass der Schwingantrieb vier Kammantriebseinheiten (KA1, KA2, KI1, KI2) aufweist, von denen eine erste und zweite Kammantriebseinheit (KI1, KA1) jeweils für positive (i1) und negative Auslenkung (a1) ein erstes Paar bilden, das an der ersten Schwungmasse (m1) angreift und eine dritte und vierte Kammantriebseinheit (KI2, KA2) ein zweites Paar jeweils für positive und negative Auslenkung (i2, a2) bilden, das an der zweiten Schwungmasse (m2) angreift,
die beiden Kammantriebseinheiten (KI1, KA1 und KI2, KA2) jedes Paars an der jeweiligen Schwungmasse (m1, m2) einander gegenüber so angeordnet sind, dass sich jeweils die Antriebskräfte der Kammantriebseinheiten (KI1, KI2) für positive Auslenkung (i1, i2) und die Antriebskräfte der Kammantriebseinheiten (KA1, KA2) für negative Auslenkung (a1, a2) addieren, und die Steuereinheit (3) die Antriebsspannung ($U_{PKI, Antrieb}$) den Kammantriebseinheiten (KI1, KI2) für positive Auslenkung (i1, i2) gegenphasig zur Antriebsspannung ($U_{PKA, Antrieb}$) für die Kammantriebseinheiten (KA1, KA2) für negative Auslenkung (a1, a2) zuführt.

10. Mikromechanischer Bewegungssensor nach Anspruch 9, **dadurch gekennzeichnet, dass** die Kompensationsantriebsmittel vier zusätzliche Kompensations-Kammantriebseinheiten (KIK1, KAK2, KIK2, KAK2) aufweisen, von denen eine erste und zweite jeweils für positive (i1) und negative Auslenkung (a1) ein erstes Paar bilden, das an der ersten Schwungmasse (1) angreift, und eine dritte und vierte jeweils für positive (i2) und negative Auslenkung (a2) ein zweites Paar bilden, das an der zweiten Schwungmasse (1) angreift,
die beiden Kompensations-Kammantriebseinheiten (KIK1, KAK1 und KIK2, KAK2) jedes Paars an der jeweiligen. Schwungmasse (m1, m2) einander gegenüber so angeordnet sind, dass sich deren Antriebskräfte für positive (i1, i2) und negative Auslenkung (a1, a2) jeweils addieren und
die Steuereinheit (3) die Kompensationsspannung den Kompensations-Kammantriebseinheiten (KIK1, KIK2) für positive Auslenkung (i1, i2) gegenphasig zur Kompensationsspannung für die Kompensations-Kammantriebseinheiten (KAK1, KAK2) für negative Auslenkung (a1, a2) zuführt.

11. Mikromechanischer Bewegungssensor nach einem der Ansprüche 2 bis 10, **dadurch gekennzeichnet, dass** die Steuereinheit (3) die Antriebsspannung ($U_{PKI, Antrieb}$) für die Kammantriebseinheit(en) (KI1, KI2) für positive Auslenkung (i; i1,i2) annähernd symmetrisch zu jedem positiven Nulldurchgang der Schwingung ($\gamma(t)$) der Schwungmasse (1; m1, m2) und die Antriebsspannung ($U_{PKA, Antrieb}$) für die Kammantriebseinheit(en) (KA1, KA2) für negative Auslenkung (a; a1, a2) annähernd symmetrisch zu jedem negativen Nulldurchgang der Schwingung ($\gamma(t)$) der Schwungmasse (1; m1, m2) erzeugt.

12. Mikromechanischer Bewegungssensor nach einem der Ansprüche 7 bis 11, **dadurch gekennzeichnet, dass** die Steuereinheit (3) die Kompensationsspannung ($U_{PKI, Komp}$) für die Kompensations-Kammantriebseinheit(en) (KIK1, KIK2) für positive Auslenkung (i; i1, i2) um annähernd ein Viertel ($\pi/2$) der Schwingungsperiode der Schwingung ($\gamma(t)$) der Schwungmasse (1; m1 ,m2) verzögert gegenüber der Antriebsspannung ($U_{PKA, Antrieb}$) für die Kammantriebseinheit(en) (KA1, KA2) für negative Auslenkung (a; a1, a2) erzeugt und die Kompensationsspannung ($U_{PKA, Komp}$) für die Kompensations-Kammantriebseinheit(en) (KAK1, KAK2) für negative Auslenkung (i; i1, i2) um annähernd ein Viertel ($\pi/2$) der Schwingungsperiode der Schwingung ($\gamma(t)$) der Schwungmasse (1) verzögert gegenüber der Antriebsspannung ($U_{PKI, Antrieb}$) für die Kammantriebseinheit(en) (KI1, KI2) für positive Auslenkung (i; i1, i2) erzeugt.

13. Mikromechanischer Bewegungssensor nach einem der Ansprüche 2 bis 12, **dadurch gekennzeichnet, dass** die Steuereinheit (3) die Antriebsspannungen ($U_{PKI, Antrieb}$, $U_{PKA, Antrieb}$) für die Kammantriebseinheiten (KI1, KI2, KA1, KA2) des Schwingantriebs jeweils als Rechteckimpulse erzeugt, deren Impulsdauer jeweils eine halbe Periodendauer ($\pi$) der Schwingungsperiode der Schwingung ($\gamma(t)$) der Schwungmasse (1; m1, m2) beträgt und die Kompensationsspannungen ($U_{PKI, Komp}$, $U_{PKA, Komp}$) für die Kompensations-Kammantriebseinheiten (KIK2, KIK2, KAK1, KAK2) jeweils als Halbwellen einer harmonischen Schwingung mit derselben Periodendauer wie die Schwingung ($\gamma(t)$) der Schwungmasse (1; m1, m2) erzeugt.

14. Mikromechanischer Bewegungssensor nach Anspruch 13, **dadurch gekennzeichnet, dass** die Steuereinheit (3) die Kompensationsspannungen ($U_{PKI, Komp}$, $U_{PKA, Komp}$) mit einer größeren Amplitude als die Antriebsspannungen ($U_{PKI, Antrieb}$, $U_{PKA, Antrieb}$) erzeugt.

15. Mikromechanischer Bewegungssensor nach einem der Ansprüche 2-14, **dadurch gekennzeichnet, dass** der effektive Wirkradius bzw. die effektive Wirkdistanz der Kompensations-Kammantriebseinheiten (KAK1, KAK2, KIK1, KIK2) größer ist als der effektive Wirkradius bzw. die effektive Wirkdistanz der Kammantriebseinheiten (KA1, KA2, KI1, KI2) der Antriebsmittel.

16. Mikromechanischer Bewegungssensor nach einem der Ansprüche 2-15, **dadurch gekennzeichnet, dass** die Steuereinheit (3) die idealen Kompensationsspannungssignale durch Treppensignale mit feinen Stufen approximiert.

**Claims**

1. Micromechanical motion sensor, which can detect deflection exerted upon a vibrationally mounted beam spring member (1, 2) excited to permanent periodic vibration ($\gamma$(t)) by an electrostatic vibratory drive acted upon with a periodic drive voltage, **characterized in that** electrostatic compensating drive means acting on the beam spring member (1, 2, m1, m2, F1-F4, FC) are provided, which are acted upon with a periodic compensating voltage suitable for compensating a non-lineararity of the resonant frequency response of the beam spring member (1, 2, m1, m2, F1-F4, FC).

2. Micromechanical motion sensor according to Claim 1, **characterized in that** it is configured as a linear oscillator, in which the beam spring member has a system consisting of a plurality of flywheel masses (m1, m2), which is connected by means of a centrally arranged coupling spring (FC) and is linearly vibrationally mounted by means of a symmetrical spring suspension (F1-F4) and which is excited by the vibratory drive (KI, KA) to linear vibration in a lateral plane (x, y) with equal positive (i1, i2) and negative (a1, a2) deflections about a position of rest (O1, 02), **in that** the vibratory drive for exciting the flywheel mass system (m1, m2) has in each case for the positive (i1, i2) and negative (a1, a2) deflection in each case at least one comb-type drive unit (KI1, KI2, KA1, KA2) which is activated by a control unit (3) and the drive forces of which act on the flywheel mass system at a plurality of action points lying in the same lateral plane (x, y) and opposite one another in each case on each flywheel masses (m1, m2) of the system, such that the said drive forces excite the flywheel masses (m1, m2) of the system about their respective position of rest (O1, 02), and **in that** the compensating drive means have for each flywheel mass (m1, m2) of the system at least one comb-type drive unit (KIK1, KIK2, KAK1, KAK2) which act on at least one of the action points of each flywheel mass (m1, m2) of the system.

3. Micromechanical motion sensor according to Claim 1, **characterized in that** it is configured as a rate-of-rotation sensor, in which the beam spring member (1, 2) has a central-symmetrically configured flywheel mass (1) which is mounted centrically by means of a centrally arranged X-spring (2) and which is excited by the vibratory drive (KI, KA) to torsional vibration in a lateral plane (x, y) with equal positive and negative deflections (i, a) about a position of rest (O), **in that** the vibratory drive for exciting the flywheel mass (1) has in each case for the positive and negative deflection (i, a) in each case at least one comb-type drive unit (KI1, KI2, KA1, KA2) for exciting the flywheel mass (1), which comb-type drive unit is activated with the periodic drive voltage by a control unit (3) and the drive forces of which comb-type drive unit act tangentially on the flywheel mass (1) at at least one first action point (P1, P2) lying in the same lateral plane (x, y), such that the said drive forces excite the flywheel mass (1) symmetrically about its position of rest (O), and **in that** the compensating drive means have at least one comb-type drive unit which acts at the same action point (P1, P2) and/or at a second action point (P2, P1) lying diametrically opposite the latter at the same distance from the centre (X) of the flywheel mass (1).

4. Micromechanical motion sensor according to either one of Claims 2 and 3, **characterized in that** the at least one comb-type drive unit of the compensating drive means is at least one of the comb-type drive units (KI1, KI2, KA1, KA2) of the vibratory drive, and the control unit (3), the drive voltage ($U_{PKI, \, drive}$, $U_{PKA}$, drive) of which is superposed with the compensating voltage ($U_{PKI, \, comp}$, $U_{PKA, \, comp}$) to form a total exciting voltage ($U_{PKI,tot}$, $U_{PKA,tot}$).

5. Micromechanical motion sensor according to either one of Claims 2 and 3, **characterized in that** the at least one comb-type drive unit of the compensating drive means is an additional compensating comb-type drive unit (KIK1, KIK2, KAK1, KAK2) to which the control unit (3) separately feeds only the compensating voltage ($U_{PKI, \, comp}$, $U_{PKA, \, comp}$).

6. Micromechanical motion sensor according to one of Claims 3 to 5, **characterized in that** the vibratory drive has four symmetrical comb-type drive units (KA1, KA2, KI1, KI2), of which a first and a second comb-type drive unit (KI1, KA1) form in each case for positive and negative deflection (i, a) a first pair which has a first common action point (P1) on the flywheel mass (1), and a third and a fourth comb-type drive unit (KI2, KA2) form in each case for positive and negative deflection (i, a) a second pair which acts on the flywheel mass (1) on the second common action point (P2), the two comb-type drive units (KI1, KA1 and KI2, KA2) of each pair are arranged opposite one another and parallel to an imaginary line defining the position of rest (O) of the flywheel mass and passing through the centre, such that in each case the drive forces of the comb-type drive units for positive deflection (i) and the drive forces of the comb-type drive units for negative deflection (a) are added to one another, and the control unit (3) feeds the drive voltage ($U_{PKI, \, drive}$) to the comb-type drive units (KI1, KI2) for positive deflection (i) in phase opposition to the drive voltage ($U_{PKA, \, drive}$) for the comb-type drive units (KA1, KA2) for negative deflection (a).

7. Micromechanical motion sensor according to Claim 5 or 6, **characterized in that** the compensating drive means have two additional compensating comb-type drive units (KIK1, KAK2) in each case for positive (i) and negative (a) deflection, which act in each case on the flywheel mass (1) on the first and the second common action point (P1, P2) and are arranged such that their action forces for positive (i) and negative (a) deflection are in each case added to one another, and the control unit (3) feeds the compensating voltage ($U_{PKI, comp}$) of the compensating comb-type drive unit (KIK1) for positive deflection (i) in phase opposition to the compensating voltage ($U_{PKA, comp}$) which it feeds to the compensating comb-type drive unit (KAK2) for negative deflection (a).

8. Micromechanical motion sensor according to Claim 5 or 6, **characterized in that** the compensating drive means have four additional compensating comb-type drive units (KIK1, KAK2, KIK2, KAK2), of which a first and a second comb-type drive unit (KIK1, KAK1) form in each case for positive (i) and negative (a) deflection a first pair which acts on the flywheel mass (1) of the first common action point (P1), and a third and a fourth comb-type drive unit (KIK2, KAK2) form in each case for positive (i) and negative (a) deflection a second pair which acts on the flywheel mass (1) on the second common action point (P2), the two compensating comb-type drive units (KIK1, KAK1 and KIK2, KAK2) of each pair are arranged opposite one another and parallel to an imaginary line defining the position of rest (0) of the flywheel mass (1) and passing through its centre, such that their drive forces for positive (i) and negative (a) deflection are in each case added to one another, and the control unit (3) feeds the compensating voltage to the compensating comb-type drive units (KIK1, KIK2) for positive deflection (i) in phase opposition to the compensating voltage for the compensating comb-type drive units (KAK1, KAK2) for negative deflection (a).

9. Micromechanical motion sensor according to one of Claims 2, 4 and 5, **characterized in that** the flywheel mass system has a first (m1) and a second (m2) flywheel mass which are connected spring-elastically by means of the central coupling spring (FC), **in that** the vibratory drive has four comb-type drive units (KA1, KA2, KI1, KI2), of which a first and a second comb-type drive unit (KI1, KA1) form in each case for positive (i1) and negative (a1) deflection a first pair which acts on the first flywheel mass (m1) and a third and a fourth comb-type drive unit (KI2, KA2) form in each case for positive and negative deflection (i2, a2) a second pair which acts on the second flywheel mass (m2), the two comb-type drive units (KI1, KA1 and KI2, KA2) of each pair are arranged opposite one another on the respective flywheel mass (m1, m2) such that in each case the drive forces of the comb-type drive units (KI1, KI2) for positive reflection (i1, 12) and the drive forces of the comb-type drive units (KA1, KAI2) for negative deflection (a1, a2) are added to one another, and the control unit (3) feeds the drive voltage ($U_{PKI, drive}$) to the comb-type drive units (KI1, KI2) for positive deflection (i1, i2) in phase opposition to the drive voltage ($U_{PKA, drive}$) for the comb-type drive units (KA1, KA2) for negative deflection (a1, a2).

10. Micromechanical motion sensor according to Claim 9, **characterized in that** the compensating drive means have four additional compensating comb-type drive units (KIK1, KAK1, KIK2, KAK2), of which a first and a second form in each case for positive (i1) and negative (a1) deflection a first pair which acts on the first flywheel mass (1), and a third and a fourth form in each case for positive (i2) and negative (a2) deflection a second pair which acts on the second flywheel mass (1), the two compensating comb-type drive units (KIK1, KAK1 and KIK2, KAK2) of each pair are arranged opposite one another on the respective flywheel mass (m1, m2) such that their drive forces for positive (i1, i2) and negative (a1, a2) deflection are in each case added to one another, and the control unit (3) feeds the compensating voltage to the compensating comb-type drive units (KIK1, KIK2) for positive deflection (i1, i2) in phase opposition to the compensating voltage for the compensating comb-type drive units (KAK1, KAK2) for negative deflection (a1, a2).

11. Micromechanical motion sensor according to one of Claims 2 to 10, **characterized in that** the control unit (3) generates the drive voltage ($U_{PKI, drive}$) for the comb-type drive unit or units (KI1, KI2) for positive deflection (i; i1, i2) approximately symmetrically to each positive zero passage of the vibration ($\gamma(t)$) of the flywheel mass (1; m1, m2) and the drive voltage ($U_{PKA, drive}$) for the comb-type drive unit or units (KA1, KA2) for negative deflection (a; a1, a2) approximately symmetrically to each negative zero passage of the vibration ($\gamma(t)$) of the flywheel mass (1; m1, m2).

12. Micromechanical motion sensor according to one of Claims 7 to 11, **characterized in that** the control unit (3) generates the compensating voltage ($U_{PKI, comp}$) for the compensating comb-type drive unit or units (KIK1, KIK2) for positive deflection (i; i1, i2) with a delay of approximately one quarter ($\pi/2$) of the vibration period of the vibration ($\gamma(t)$) of the flywheel mass (1; m1, m2) with respect to the drive voltage ($U_{PKA, drive}$) for the comb-type drive unit or units (KA1, KA2) for negative deflection (a; a1, a2) and generates the compensating voltage (($U_{PKA, comp}$) for the compensating comb-type drive unit or units (KAK1, KAK2) for negative deflection (i; i1, i2) with a delay of approximately one quarter ($\pi/2$) of the vibration period of the vibration ($\gamma(t)$) of the flywheel mass (1) with respect to the drive voltage ($U_{PKI, drive}$) for the comb-type drive unit or units (KI1, KI2) for positive deflection (i; i1, i2).

13. Micromechanical motion sensor according to one of Claims 2 to 12, **characterized in that** the control unit (3) generates the drive voltages ($U_{PKI, drive}$, $U_{PKA, drive}$) for the comb-type drive units (KI1, KI2, KA1, KA2) of the vibratory drive in each case as rectangular pulses, the pulse duration of which amounts in each case to half the period duration ($\pi$) of the vibration period of the vibration ($\gamma(t)$) of the flywheel mass (1; m1, m2) and generates the compensating voltages ($U_{PKI, comp}$, $U_{PKA, comp}$) for the compensating comb-type drive units (KIK1, KIK2, KAK1, KAK2) in each case as half-waves of harmonic vibration of the same period duration as the vibration ($\gamma(t)$) of the flywheel mass (1; m1, m2).

14. Micromechanical motion sensor according to Claim 13, **characterized in that** the control unit (3) generates the compensating voltages ($U_{PKI, comp}$, $U_{PKA, comp}$) with a higher amplitude than the drive voltages ($U_{PKI, drive}$, $U_{PKA, drive}$).

15. Micromechanical motion sensor according to one of Claims 2-14, **characterized in that** the effective active radius or the effective active distance of the compensating comb-type drive units (KAK1, KAK2, KIK1, KIK2) is greater than the effective active radius or effective active distance of the comb-type drive units (KA1, KA2, KI1, KI2) of the drive means.

16. Micromechanical motion sensor according to one of Claims 2-15, **characterized in that** the control unit (3) approximates the ideal compensating voltage signals by means of staircase signals with fine steps.

**Revendications**

1. Sonde micromécanique de déplacement capable de détecter une déviation exercée sur un organe (1, 2) à poutre élastique monté à oscillation et excité à osciller périodiquement ($\gamma(t)$) de manière permanente par un entraînement électrostatique oscillant sur lequel est appliquée une tension périodique d'entraînement,
**caractérisée en ce que**
des moyens électrostatiques d'entraînement de compensation sur lesquels est appliquée une tension périodique de compensation qui convient pour compenser une non-linéarité du passage par la fréquence de résonance de l'organe (1, 2, m1, m2, F1-F4, FC) à poutre élastique sont prévus pour agir sur l'organe (1, 2, m1, m2, F1-F4, FC) à poutre élastique.

2. Sonde micromécanique de déplacement selon la revendication 1, **caractérisée en ce qu'**elle est configurée comme oscillateur linéaire dans lequel l'organe à poutre élastique présente un système constitué de plusieurs masses oscillantes (m1, m2) qui est relié par un ressort de couplage (FC) disposé centralement et qui est monté de manière à pouvoir osciller linéairement grâce à une suspension élastique symétrique (F1-F4), le système étant excité par l'entraînement oscillant (KI, KA) à osciller linéairement dans un plan latéral (x, y) avec des déviations positives (i1, i2) et des déviations négatives (a1, a2) de même amplitude autour d'une position de repos (O1, 02),
**en ce que** pour exciter le système de masses oscillantes (m1, m2), l'entraînement oscillant présente pour la déviation positive (i1, i2) et pour la déviation négative (a1, a2) une unité (KI1, KI2, KA1, KA2) respective en peigne commandée par une unité de commande (3) et dont les forces d'entraînement agissent sur le système de masses oscillantes au niveau de plusieurs points d'action disposés dans le même plan latéral (x, y) et mutuellement opposés sur chaque masse oscillante (m1, m2) du système, de telle sorte que ces forces excitent les masses oscillantes (m1, m2) du système autour de leur position de repos (O1, 02) et
**en ce que** pour chaque masse oscillante (m1, m2) du système, les moyens d'entraînement de compensation présentent au moins une unité (KIK1, KIK2, KAK1, KAK2) d'entraînement en peigne qui agit en au moins un des points d'action de chaque masse oscillante (m1, m2) du système.

3. Sonde micromécanique de déplacement selon la revendication 1, **caractérisée en ce qu'**elle est configurée comme sonde de vitesse de rotation dans laquelle l'organe (1, 2) à poutre oscillante présente une masse oscillante (1) à symétrie centrale montée centralement par un ressort X (2) disposé centralement et excitée par l'entraînement oscillant (KI, KA) à osciller en rotation dans un plan latéral (x, y) avec des déviations positives et des déviations négatives (i, a) de même amplitude autour d'une position de repos (O),
**en ce que** pour exciter la masse oscillante (1), l'entraînement oscillant présente pour la déviation positive et pour la déviation négative (i, a) au moins une unité (KI1, KI2, KA1, KA2) respective d'entraînement en peigne qui excite la masse oscillante (1) et qui est commandée respectivement pour la déviation positive et pour la déviation négative (i, a) par au moins une tension périodique d'entraînement commandée par l'unité de commande (3), les forces d'entraînement de l'entraînement oscillant agissant tangentiellement sur la masse oscillante (1) en au moins un premier point d'action (P1, P2) situé dans le même plan latéral (x, y), **en ce que** ces forces excitent la masse oscillante (1) symétriquement autour de sa position de repos (O) et **en ce que** les moyens d'entraînement de compensation présentent au moins une unité d'entraînement en peigne qui agit sur le même point d'action (P1, P2) et/ou sur un deuxième point d'action (P2, P1) opposé diamétralement au premier à même distance du centre (Z) de la masse oscillante (1).

4. Sonde micromécanique de déplacement selon l'une des revendications 2 ou 3, **caractérisée en ce que** la ou les unités d'entraînement en peigne des moyens d'entraînement de compensation sont la ou les unités (KI1, KI2, KA1, KA2) d'entraînement en peigne de l'entraînement oscillant, l'unité de commande (3) superposant la tension d'entraînement ($U_{PKI, Antrieb}$, $U_{PKA, Antrieb}$) à la tension de compensation ($U_{PKI, KOMP}$, $U_{PKA, KOMP}$) pour fournir une tension globale d'excitation ($U_{PKI, Ges}$, $U_{PKA, Ges}$).

5. Sonde micromécanique de déplacement selon l'une des revendications 2 ou 3, **caractérisée en ce que** la ou les unités d'entraînement en peigne des moyens d'entraînement de compensation sont la ou les unités supplémentaires (KIK1, KIK2, KAK1, KAK2) d'entraînement en peigne de compensation auxquelles l'unité de commande (3) amène séparément uniquement la tension de compensation ($U_{PKI, KOMP}$, $U_{PKA, KOMP}$).

6. Sonde micromécanique de déplacement selon l'une des revendications 3 à 5, **caractérisée en ce que** l'entraînement oscillant présente quatre unités symétriques (KA1, KA2, KI1, KI2) d'entraînement en peigne parmi lesquelles une première et une deuxième unité (KI1, KA1) d'entraînement en peigne, respectivement pour la déviation positive et la déviation négative (i, a), forment une première paire qui présente un premier point d'action commun (P1) sur la masse oscillante (1), et une troisième et une quatrième unité (KI2, KA2) d'entraînement en peigne forment respectivement pour la déviation positive et la déviation négative (i, a) une deuxième paire qui agit sur la masse oscillante (1) en le deuxième point d'action commun (P2), les deux unités (KI1, KA1 et KI2, KA2) d'entraînement en peigne de chaque paire étant disposées l'une en face de l'autre et parallèlement à une ligne imaginaire qui définit la position de repos (0) de la masse oscillante et qui passe par son centre, de telle sorte que les forces d'entraînement des unités d'entraînement en peigne s'additionnent pour la déviation positive (i) et que les forces d'entraînement des unités d'entraînement en peigne s'additionnent pour la déviation négative (a) et **en ce que** l'unité de commande (3) apporte la tension d'entraînement ($U_{PKI, Antrieb}$) des unités (KI1, KI2) d'entraînement en peigne prévue pour la déviation positive (i) en opposition de phase à la tension d'entraînement ($U_{PKA, Antrieb}$) prévue pour les unités (KA1, KA2) d'entraînement en peigne pour la déviation négative (a).

7. Sonde micromécanique de déplacement selon les revendications 5 ou 6, **caractérisée en ce que** les moyens d'entraînement de compensation présentent deux unités supplémentaires (KIK1, KAK2) d'entraînement en peigne de compensation, respectivement pour la déviation positive (i) et la déviation négative (a), ces unités agissant sur la masse oscillante (1) chacune au niveau du premier et du deuxième point d'action communs (P1, P2) et étant disposées de telle sorte que leurs forces d'action s'ajoutent respectivement pour la déviation positive (i) et pour la déviation négative (a), l'unité de commande (3) apportant la tension de compensation ($U_{PKI, KOMP}$) de l'unité (KIK1) d'entraînement en peigne de compensation prévue pour la déviation positive (i) en opposition dé phase par rapport à la tension de compensation ($U_{PKA, KOMP}$) qu'elle apporte à l'unité (KAK2) d'entraînement en peigne de compensation prévue pour la déviation négative (a).

8. Sonde micromécanique de déplacement selon les revendications 5 ou 6, **caractérisée en ce que** les moyens d'entraînement de compensation présentent quatre unités supplémentaires (KIK1, KAK2, KIK2, KAK2) d'entraînement en peigne de compensation parmi lesquelles une première et une deuxième unité d'entraînement en peigne (KIK1, KAK1) forment respectivement pour la déviation positive (i) et la déviation négative (a) une première paire qui agit sur la masse oscillante (1) au niveau du premier point d'action commun (P1) et une troisième et une quatrième unité (KIK2, KAK2) d'entraînement en peigne qui forment pour la déviation positive (i) et la déviation négative (a) une deuxième paire qui agit sur la masse oscillante (1) au niveau du deuxième point d'action commun (P2), les deux unités (KIK1, KAK1 et KIK2, KAK2) d'entraînement en peigne de compensation de chaque paire étant disposées l'une en face de l'autre et parallèlement à une ligne imaginaire qui définit la position de repos (0) de la masse oscillante (1) et qui passe par son centre, de telle sorte que leurs forces d'entraînement pour la déviation positive (i) et pour la déviation négative (a) s'additionnent et **en ce que** l'unité de commande (3) apporte la tension de compensation aux unités (KIK1, KIK2) d'entraînement en peigne de compensation prévues pour la déviation positive (i) en opposition de phase par rapport à la tension de compensation des unités (KAK1, KAK2) d'entraînement en peigne de compensation prévues pour la déviation négative (a).

9. Sonde micromécanique de déplacement selon l'une des revendications 2, 4 ou 5, **caractérisée en ce que** le système de masses oscillantes présente une première masse oscillante (m1) et une deuxième masse oscillante (m2) reliées élastiquement par le ressort central de couplage (FC), **en ce que** l'entraînement oscillant présente quatre unités (KA1, KA2, KI1, KI2) d'entraînement en peigne parmi lesquelles une première et une deuxième unité (KI1, KA1) d'entraînement en peigne forment pour la déviation positive (i1) et la déviation négative (a1) une première paire qui agit sur la première masse oscillante (m1) et une troisième et une quatrième unité (KI2, KA2) d'entraînement en peigne forment pour la déviation positive et la déviation négative (i2, a2) une deuxième paire qui agit sur la deuxième masse oscillante (m2), les deux unités (KI1, KA1 et KI2, KA2) d'entraînement en peigne de chaque paire étant disposées sur la masse oscillante (m1, m2) respective en opposition mutuelle, de telle sorte que les forces d'entraînement des unités (KI1, KI2) d'entraînement en peigne prévues pour la déviation positive (i1, i2) et les forces d'entraînement des unités (KA1, KA2) d'entraînement en peigne prévues pour la déviation négative (a1, a2) s'additionnent, l'unité d'entraînement (3) apportant la tension d'entraînement ($U_{PKI, Antrieb}$) aux unités (KI1, KI2) d'entraînement en peigne prévues pour la déviation positive (i1, i2) en opposition de phase par rapport à la tension d'entraînement ($U_{PKA, Antrieb}$) pour les unités (KA1, KA2) d'entraînement en peigne prévues pour la déviation négative (a1, a2).

10. Sonde micromécanique de déplacement selon la revendication 9, **caractérisée en ce que** les moyens d'entraînement de compensation présentent quatre unités supplémentaires (KIK1, KAK1, KIK2, KAK2) d'entraînement en peigne de compensation parmi lesquelles une première et une deuxième forment pour la déviation positive (i1) et pour la déviation négative (a1) une première paire qui agit sur la première masse oscillante (1) et une troisième et quatrième forment pour la déviation positive (i2) et la déviation négative (a2) une deuxième paire qui agit sur la deuxième masse oscillante (1), les deux unités (KIK1, KAK1 et KIK2, KAK2) d'entraînement en peigne de compensation de chaque paire étant disposées l'une par rapport à l'autre sur la masse oscillante (m1, m2) respective de telle sorte que leurs forces d'entraînement pour la déviation positive (i1, i2) et la déviation négative (a1, a2) s'additionnent, l'unité de commande (3) apportant la tension de compensation aux unités (KIK1, KIK2) d'entraînement en peigne de compensation prévues pour la déviation positive (i1, i2) en opposition de phase par rapport à la tension de compensation pour les unités (KAK1, KAK2) d'entraînement en peigne de compensation prévues pour la déviation négative (a1, a2).

11. Sonde micromécanique de déplacement selon l'une des revendications 2 à 10, **caractérisée en ce que** l'unité de commande (3) forme la tension d'entraînement ($U_{PKI, Antrieb}$) pour la ou les unités (KI1, KI2) d'entraînement en peigne prévues pour la déviation positive (i; i1, i2) de manière approximativement symétrique à chaque passage positif par zéro de l'oscillation ($\gamma(t)$) de la masse oscillante (1; m1, m2) et la tension d'entraînement ($U_{PKA, Antrieb}$) pour la ou les unités (KA1, KA2) d'entraînement en peigne pour la déviation négative (a; a1, a2) de manière approximativement symétrique par rapport à chaque passage négatif par zéro de l'oscillation ($\gamma(t)$) de la masse oscillante (1; m1, m2).

12. Sonde micromécanique de déplacement selon l'une des revendications 7 à 11, **caractérisée en ce que** l'unité de commande (3) produit la tension de compensation ($U_{PKI, Komp}$) pour la ou les deuxièmes unités (KIK1, KIK2) d'entraînement en peigne de compensation prévues pour la déviation positive (i; i1, i2) à un retard qui correspond approximativement au quart ($\pi/2$) de la période d'oscillation de l'oscillation ($\gamma(t)$) de la masse oscillante (1; m1, m2) par rapport à la tension d'entraînement ($U_{PKA, Antrieb}$) pour la ou les unités (KA1, KA2) d'entraînement en peigne prévues pour la déviation négative (a; a1, a2) et forme la tension de compensation ($U_{PKA, Komp}$) pour la ou les unités (KAK1, KAK2) d'entraînement en peigne de compensation prévues pour la déviation négative (i; i1, i2) à un retard d'approximativement un quart ($\pi/2$) de la période d'oscillation de l'oscillation ($\gamma(t)$) de la masse oscillante (1) par rapport à la tension d'entraînement ($U_{PKI, Antrieb}$) pour la ou les unités (KI1, KI2) d'entraînement en peigne prévues pour la déviation positive (i; i1, i2).

13. Sonde micromécanique de déplacement selon l'une des revendications 2 à 12, **caractérisée en ce que** l'unité de commande (3) forme les tensions d'entraînement ($U_{PKI, Antrieb}$, $U_{PKA, Antrieb}$) pour les unités (KI1, KI2, KA1, KA2) d'entraînement en peigne de l'entraînement oscillant sous la forme d'impulsions rectangulaires dont la durée représente la moitié de la durée de la période ($\pi$) d'oscillation de l'oscillation ($\gamma(t)$) de la masse oscillante (1; m1, m2) et forme les tensions de compensation ($U_{PKI, Komp}$, $U_{PKA, Komp}$) pour les unités (KIK1, KIK2, KAK1, KAK2) d'entraînement en peigne de compensation sous la forme de demi-ondulations d'une oscillation harmonique qui présente la même période que l'oscillation ($\gamma(t)$) de la masse oscillante (1; m1, m2).

14. Sonde micromécanique de déplacement selon la revendication 13, **caractérisée en ce que** l'unité de commande (3) forme les tensions de compensation ($U_{PKI, Komp}$, $U_{PKA, Komp}$) à une amplitude plus grande que les tensions d'entraînement ($U_{PKI, Antrieb}$, $U_{PKA, Antrieb}$).

15. Sonde micromécanique de déplacement selon l'une des revendications 2 à 14, **caractérisée en ce que** le rayon effectif d'action ou la distance effective d'action des unités (KAK1, KAK2, KIK1, KIK2) d'entraînement en peigne de compensation sont plus grands que le rayon effectif d'action ou la distance effective d'action des unités (KA1, KA2, KI1, KI2) d'entraînement en peigne des moyens d'entraînement.

16. Sonde micromécanique de déplacement selon l'une des revendications 2 à 15, **caractérisée en ce que** l'unité de commande (3) réalise une approximation des signaux idéaux de tension de compensation par des signaux en fins gradins.

# FIG. 1

# FIG. 2

# FIG. 3

# FIG. 4

## (A)

## (B)

$U_{PKA, Antrieb}$

## (C)

$U_{PKI, Antrieb}$

# FIG. 5

# FIG. 6

**(A)**

**(B)**

**(C)**

**(D)**

$\dfrac{\pi}{2}$

**(E)**

$\dfrac{\pi}{2}$

**(F)**

$U_{PKA,\ Antrieb}$

$U_{PKI,\ Antrieb}$

$U_{PKA,\ Komp}$

$U_{PKI,\ Komp}$

$U_{PKA,\ Ges}$
$U_{PKI,\ Ges}$

# FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5025346 A
- US 6267008 B